# EUROPEAN PATENT APPLICATION

(11) **EP 4 756 937 A1**
(43) Date of publication of application: **10.06.2026**
(21) Application number: 25219262.0
(22) Date of filing: 28.11.2025
(51) Int. Cl.: H01M 8/04029, H01M 8/0432, H01M 8/04701, H01M 8/249

(54) **FUEL CELL SYSTEM**

(30) Priority: 03.12.2024 JP 2024209883
(71) Applicant: Honda Motor Co., Ltd., Toyko 105-8404 (JP)
(72) Inventor: OTAKE, Masato, Saitama, 351-0193 (JP); FUKUSHIMA, Yukihiro, Saitama, 351-0193 (JP)
(74) Representative: Weickmann & Weickmann PartmbB

(57) **Abstract**

A fuel cell system (100) includes a temperature detection part (52) detecting temperatures of respective fuel cells (1), a cooling system (40) including a cooling medium supply part (42) supplying a cooling medium to each of the plurality of fuel cells (1), a power storage device (53), and a control unit (102). When a temperature (Ta) of a first fuel cell (1A) detected by the temperature detection part (52) becomes equal to or higher than a predetermined temperature (T1), the control unit (102) controls the cooling system (40) so as to cool the first and second fuel cells (1A, 1B) with a cooling capacity corresponding to a temperature (Tb) of a second fuel cell (1B) having a lower temperature than the first fuel cell (1A), performs output limitation for the first fuel cell (1A), and discharges an electric power from the power storage device (53) in accordance with the output limitation.

## Description

### BACKGROUND OF THE INVENTION

### Field of the Invention

This invention relates to a fuel cell system including a plurality of fuel cells.

### Description of the Related Art

In recent years, technological developments have been made on a fuel cell that contribute to energy efficiency in order to ensure access to energy that is affordable, reliable, sustainable and advanced by more people. As a technology related to this type of fuel cell, a technique for cooling a fuel cell system including a plurality of fuel cells is known. Such a fuel cell system is described in, for example, Japanese Unexamined Patent Publication No. 2020-144984 (JP 2020-144984 A).

In the fuel cell system described in JP 2020-144984 A, when the first fuel cell and the second fuel cell are generating power, if the temperature of the first fuel cell is equal to or more than a set temperature, the second fuel cell is cooled with a cooling capacity higher than that determined based on the temperature of the second fuel cell. Subsequently, if the temperature of the first fuel cell is equal to or more than a threshold temperature, the output of the first fuel cell is limited, and the power corresponding to the limited output is output from the second fuel cell.

In the system described in JP2020-144984A, when the temperature of one fuel cell is equal to or more than the set temperature, the rotational speeds of the coolant pump and the electric fan of the radiator in the coolant circulation system of the other fuel cell are increased to enhance the cooling capacity. As a result, the power consumption of the fuel cell system increases, leading to a deterioration in fuel efficiency.

### SUMMARY OF THE INVENTION

An aspect of the present invention is a fuel cell system including a plurality of fuel cells including a first fuel cell and a second fuel cell, a temperature detection part configured to detect a temperature of each of the plurality of fuel cells, a cooling system including a cooling medium supply part configured to supply a cooling medium to the each of the plurality of fuel cells, a power storage device, and a control unit configured to control the cooling system, an output of the plurality of fuel cells, and a charging and discharging of the power storage device, in accordance with the temperature detected by the temperature detection part. When a temperature of the first fuel cell detected by the temperature detection part becomes equal to or higher than a predetermined temperature, the control unit controls the cooling system so as to cool the first fuel cell and the second fuel cell with a cooling capacity corresponding to a temperature of the second fuel cell having a lower temperature than the first fuel cell, performs an output limitation for the first fuel cell, and discharges an electric power from the power storage device in accordance with the output limitation for the first fuel cell.

### BRIEF DESCRIPTION OF THE DRAWINGS

The objects, features, and advantages of the present invention will become clearer from the following description of embodiments in relation to the attached drawings, in which:
FIG. 1 is a diagram illustrating a schematic configuration of a single unit system included in a fuel cell system according to an embodiment of the present invention;
FIG. 2 is a block diagram schematically illustrating a control configuration of the fuel cell system according to the embodiment of the present invention;
FIG. 3 is a diagram illustrating an overall configuration of a cooling system of the fuel cell system according to the embodiment of the present invention;
FIG. 4 is a block diagram schematically illustrating a configuration of a cooling control device included in the fuel cell system according to the embodiment of the present invention; and
FIG. 5 is a flowchart illustrating an example of processing performed by a controller of FIG. 4.

### DETAILED DESCRIPTION OF THE INVENTION

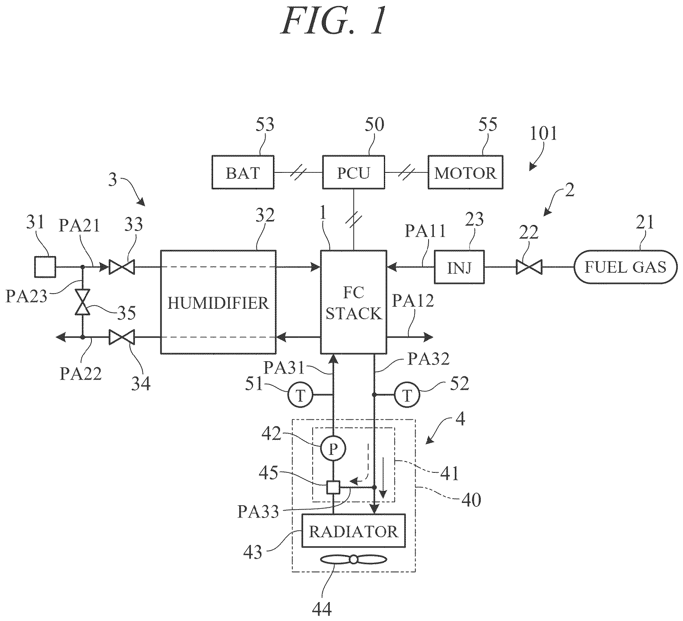

Hereinafter, an embodiment of the present invention will be described with reference to FIGs. 1 to 5. The fuel cell system according to an embodiment of the present invention includes a plurality of fuel cells. This fuel cell system can be installed in large fuel cell vehicles, such as fuel cell buses. Hereinafter, each of the plurality of fuel cells may be referred to as a unit system. By having a plurality of unit systems, the fuel cell system can increase the overall power generation capacity, thereby supplying sufficient power to a travel motor of a large fuel cell vehicle.

The configurations of the plurality of unit systems are identical to each other. FIG. 1 is a diagram illustrating a schematic configuration of a single unit system (fuel cell) 101. As illustrated in FIG. 1, the unit system 101 includes a fuel cell stack 1, a fuel gas supply and exhaust part 2 that supplies a fuel gas to the fuel cell stack 1 and discharges the fuel gas from the fuel cell stack 1, an oxidant gas supply and exhaust part 3 that supplies an oxidant gas to the fuel cell stack 1 and discharges the oxidant gas from the fuel cell stack 1, and a cooling medium supply and exhaust part 4 that supplies a cooling medium to the fuel cell stack 1 and discharges the cooling medium from the fuel cell stack 1. The fuel gas (anode gas) is, for example, hydrogen. The oxidant gas (cathode gas) is, for example, air containing oxygen. The cooling medium (coolant) is, for example, water or a coolant liquid containing ethylene glycol or propylene glycol.

The fuel cell stack 1 is configured by stacking a plurality of power generation cells. The power generation cell includes an electrolyte membrane, an anode separator disposed to face one surface of the electrolyte membrane, and a cathode separator disposed to face the other surface of the electrolyte membrane. The electrolyte membrane is, for example, a solid polymer electrolyte membrane. An anode electrode is formed on one surface of the electrolyte membrane, and a fuel gas is supplied to the anode electrode through an anode flow path between the anode separator and the anode electrode. A cathode electrode is formed on the other surface of the electrolyte membrane, and an oxidant gas is supplied to the cathode electrode through the cathode flow path between the cathode separator and the cathode electrode. The anode separator and the cathode separator are arranged in an integrally joined state, and a cooling medium flows between the anode separator and the cathode separator.

In the anode electrode, the fuel gas (hydrogen) supplied to the anode flow path is ionized by an action of a catalyst, passes through the electrolyte membrane, and moves to the cathode electrode side. Electrons generated at this time pass through an external circuit and are extracted as electric energy. In the cathode electrode, the oxidant gas (oxygen) supplied to the cathode flow path reacts with hydrogen ions guided from the anode electrode and electrons moved from the anode electrode to generate water. The generated water gives an appropriate humidity to the electrolyte membrane, and excess water is discharged to an outside.

The fuel gas supply and exhaust part 2 includes a fuel gas tank 21 in which the fuel gas is stored, a fuel gas supply flow path PA11 that guides the fuel gas in the fuel gas tank to the fuel gas inlet of the fuel cell stack 1, and a fuel gas discharge flow path PA12 through which the fuel gas (fuel exhaust gas) discharged from the fuel gas outlet of the fuel cell stack 1 flows. In the fuel gas supply flow path PA11, a shut-off valve 22 and an injector 23 are arranged. The shut-off valve 22 is a solenoid valve that opens and closes by electromagnetic force and is arranged between the fuel gas tank 21 and the injector 23. The shut-off valve 22 opens or blocks the flow path between the fuel gas tank 21 and the injector 23. The injector 23 has a single electromagnet injector or a plurality of electromagnetic injectors connected in parallel. By driving the injector 23, the fuel gas is injected, and the injected fuel gas flows toward the fuel cell stack 1.

A gas-liquid separator (not shown) is connected to the fuel gas discharge flow path PA12. In the gas-liquid separator, the fuel exhaust gas guided through the fuel gas discharge flow path PA12 is separated into fuel gas and water. The separated fuel gas is drawn into an ejector (not shown) arranged downstream of the injector 23 and guided to the fuel gas supply flow path PA11. The separated water is discharged externally via a drain flow path.

The oxidant gas supply and exhaust part 3 includes an air pump (compressor) 31 that generates high-pressure oxidant gas, an oxidant gas supply flow path PA21 that guides the oxidant gas to the oxidant gas inlet of the fuel cell stack 1, and an oxidant gas discharge flow path PA22 through which the oxidant gas (oxidant exhaust gas) discharged from the oxidant gas outlet of the fuel cell stack 1 flows. The air pump 31 compresses air taken in from the atmosphere and supplies it as oxidant gas to the fuel cell stack 1. A bypass flow path PA23 is connected to the oxidant gas supply flow path PA21 and the oxidant gas discharge flow path PA22 to guide oxidant gas from the oxidant gas supply flow path PA21 to the oxidant gas discharge flow path PA22, bypassing the fuel cell stack 1.

A humidifier 32 is connected to the oxidant gas supply flow path PA21 and the oxidant gas discharge flow path PA22. The humidifier 32 is arranged between the bypass flow path PA23 and the fuel cell stack 1. In the humidifier 32, the oxidant gas in the oxidant gas supply flow path PA21 is humidified by the moisture contained in the oxidant exhaust gas in the oxidant gas discharge flow path PA22. Shut-off valves 33 and 34 are provided between the bypass flow path PA23 and the humidifier 32 in the oxidant gas supply flow path PA21 and the oxidant gas discharge flow path PA22, respectively. The shut-off valves 33 and 34 are solenoid valves that open and close by electromagnetic force, and the flow paths PA21 and PA22 are opened or blocked as the shut-off valves 33 and 34 open and close. A bypass valve 35, which can be adjusted in opening degree and opens and closes by electromagnetic force, is provided in the bypass flow path PA23.

The cooling medium supply and exhaust part 4 includes a cooling device 41, a cooling medium supply flow path PA31 that connects the cooling device 41 and the cooling medium inlet of the fuel cell stack 1, and a cooling medium discharge flow path PA32 that connects the cooling device 41 and the cooling medium outlet of the fuel cell stack 1. The cooling device 41 is provided in the cooling medium supply flow path PA31 and has an electric pump 42 that supplies the cooling medium to the fuel cell stack 1. The cooling device 41 is included in the cooling system 40. The cooling system 40 includes a radiator 43 that cools the cooling medium by heat exchange with outside air and an electric fan 44 that blows cooling air to the radiator 43. The entire cooling system, including the radiator 43 and the electric fan 44, may be referred to as a cooling device.

A bypass flow path PA33 that bypasses the radiator 43 is connected to the cooling medium supply flow path PA31 and the cooling medium discharge flow path PA32. A thermo valve 45 is provided at the connection between the cooling medium supply flow path PA31 and the bypass flow path PA33. When the radiator-side direction of the cooling medium supply flow path PA31 is opened by the thermo valve 45, the flow through the bypass flow path PA33 is blocked. As a result, as shown by the solid arrow in FIG. 1, the cooling medium flows to the radiator 43 via the cooling medium discharge flow path PA32, and the cooling medium is cooled. When the radiator-side direction of the cooling medium supply flow path PA31 is closed by the thermo valve 45, the flow from the radiator 43 to the thermo valve 45 is blocked. As a result, as shown by the dotted arrow in FIG. 1, the cooling medium that has flowed through the cooling medium discharge flow path PA32 bypasses the radiator 43 and flows through the bypass flow path PA33, preventing the cooling of the cooling medium.

The thermo valve 45 is opened and closed according to the temperature of the cooling medium. That is, when the temperature of the cooling medium is equal to or higher than a predetermined temperature, the thermo valve 45 is opened, and when it is less than the predetermined temperature, the thermo valve 45 is closed. The thermo valve 45 is configured to be adjustable in opening degree, and a part of the cooling medium (a predetermined proportion of the cooling medium) can flow bypassing the radiator 43 through the thermo valve 45. A temperature sensor 51 is connected to the cooling medium supply flow path PA31, and the temperature of the cooling medium at the inlet of the fuel cell stack 1 (inlet coolant temperature) is detected by the temperature sensor 51. A temperature sensor 52 is connected to the cooling medium discharge flow path PA32, and the temperature of the cooling medium at the outlet of the fuel cell stack 1 (outlet coolant temperature) is detected by the temperature sensor 52. Hereinafter, the outlet coolant temperature may simply be referred to as the coolant temperature. The coolant temperature has a correlation with the temperature of the fuel cell stack 1.

The power generated by the fuel cell stack 1 is supplied to the travel motor 55 via a power control unit (PCU) 50. A battery (BAT) 53, which is a rechargeable storage device, is connected to the power control unit 50. The power control unit 50 includes a DC-DC converter that steps up or steps down the power supplied from the fuel cell stack 1 and the battery 53, and an inverter that converts the DC power into three-phase AC power and supplies it to the travel motor 55. Since the fuel cell system according to this embodiment has a plurality of fuel cell stacks 1 (unit systems 101), power from the plurality of fuel cell stacks 1 is supplied to the power control unit 50. The power control unit 50, the battery 53, and the travel motor 55 are not provided for each unit system 101, but for the entire fuel cell system.

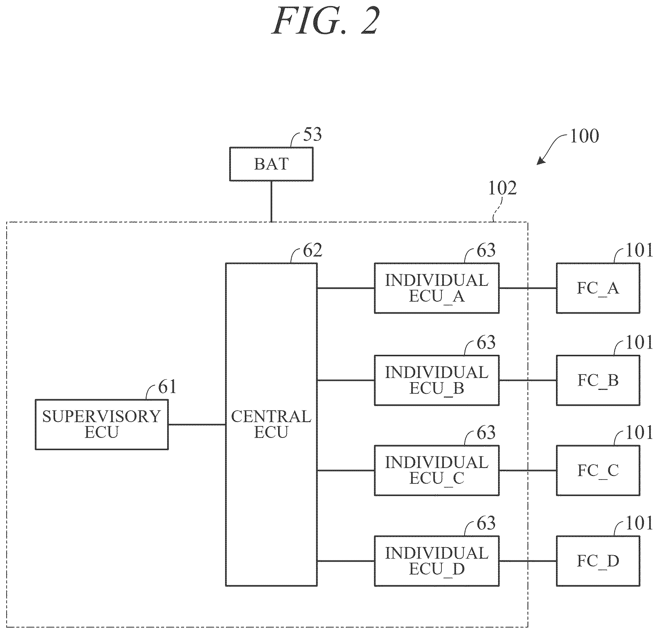

FIG. 2 is a block diagram schematically illustrating a control configuration of the fuel cell system 100 according to the present embodiment. As illustrated in FIG. 2, the fuel cell system 100 includes: a supervisory controller (a supervisory ECU) 61; a central controller (a central ECU) 62; and a plurality of individual controllers (individual ECUs) 63. Each of the controllers 61 to 63 includes a computer including a CPU, a ROM, a RAM, and a peripheral circuit. The supervisory controller 61, the central controller 62 and the plurality of individual controllers 63 will be collectively referred to as a controller 102, in some cases. The controller 102 (for example, the central controller 62) also functions as a battery controller that controls the charging and discharging of the battery 53.

The supervisory controller 61 and the central controller 62 are communicably connected with each other through a communication protocol such as a CAN. The central controller 62 and the individual controller 63 are also communicably connected with each other through a communication protocol such as a CAN. The plurality of individual controllers 63 are provided in the same number as the plurality of (e.g., four) unit systems 101 (FC_A, FC_B, FC_C, and FC_D), corresponding to each unit system 101. The individual controller 63 controls the power generation operation of the unit system 101 and the operation of the cooling device 41. FIG. 2 illustrates an example where the fuel cell system 100 has four individual controllers 63, but the number of individual controllers 63 may be other than four as long as it is multiple.

The fuel cell system 100 according to the present embodiment is mounted on a vehicle. The supervisory controller 61 calculates a power generation amount (a required power generation amount) required by the vehicle, that is, an entire required power generation amount required for the fuel cell system 100. More specifically, the supervisory controller 61 calculates target drive torque of the travel motor 55, based on a signal from an accelerator opening sensor, which detects an opening degree of the accelerator pedal, and calculates the required power generation amount necessary for the travel motor 55 to generate the target drive torque. Alternatively, the supervisory controller 61 calculates the required power generation amount, based on a signal from a battery sensor, which detects a remaining capacity SOC (State of Charge) of the battery 53, so that the remaining capacity of the battery 53 has a predetermined value. The remaining capacity SOC of the battery 53 can also be calculated by the battery ECU (not shown), and the battery ECU may transmit the SOC to the supervisory controller 61.

The central controller 62 determines a power generation amount (an individual required power generation amount) for every unit system in accordance with the required power generation amount. More specifically, the central controller 62 determines the presence or absence of an abnormality (a failure) of the unit system 101, based on a signal from the individual controller 63, and determines the individual required power generation amount, based on a determination result. The necessity of output limitation may be determined by each individual controller 63, and in this case, the central controller 62 may determine the power generation amount for each unit system (individual required power generation amount) based on the necessity of output limitation of the unit system 101 determined by each individual controller 63. For example, the central controller 62 limits the output of the unit system 101 to lower the stack outlet temperature when the stack outlet temperature of a single unit system 101 among the four unit systems 101 becomes equal to or higher than a predetermined temperature. At this time, the discharge amount of the battery 53 is increased by the amount of the output limitation, and the amount of power supplied to the motor 55 is maintained.

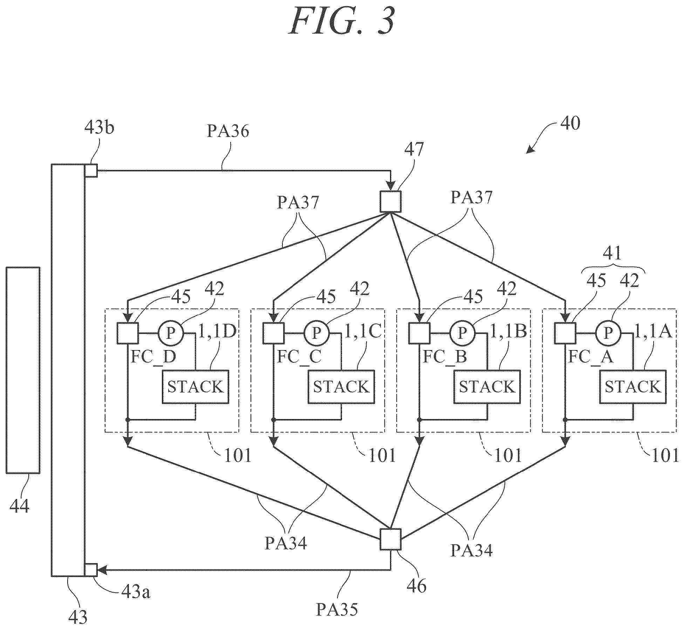

FIG. 3 is a diagram illustrating an overall configuration of the cooling system of the fuel cell system, that is, a configuration of the cooling system 40. As illustrated in FIG. 3, the cooling devices 41 (including the electric pump 42 and the thermo valve 45) of a plurality of unit systems 101 are provided in parallel to each other and connected to a merging portion 46 via flow paths PA34. When the thermo valve 45 is opened, the cooling medium having passed through the fuel cell stacks 1 flows to the merging portion 46 via each of the flow paths PA34 by driving of the electric pump 42. The cooling medium merged at the merging portion 46 flows into the radiator 43 via a flow path PA35 and an inlet 43a, and is cooled by the radiator 43.

The cooling medium having passed through the radiator 43 flows out from an outlet 43b and flows to a branch portion 47 via a flow path PA36. In the branch portion 47, the cooling medium is equally divided into a plurality of flow paths PA37, and the divided cooling mediums respectively flow to the cooling devices 41 of the unit systems 101 via the flow paths PA37. When the thermo valve 45 is closed, the flow of the cooling medium from each of the flow paths PA37 is blocked, and the cooling medium discharged from the electric pump 42 does not flow to the radiator 43 but circulates through the fuel cell stack 1 via the thermo valve 45.

As described above, in the present embodiment, the cooling devices 41 of a plurality of the unit systems 101 (FC_A, FC_B, FC_C, and FC_D) are provided in parallel to each other, and a plurality of the cooling devices 41 are connected to a single radiator 43 via the merging portion 46 and the branch portion 47 to constitute the cooling system 40. Therefore, the number of components of the cooling system 40 can be reduced as compared with a case where the radiator 43 and an electric fan 44 are provided for each unit system. In FIG. 3, the fuel cell stacks 1 respectively included in the unit systems FC_A, FC_B, FC_C, and FC_D are denoted by 1A to 1D, respectively.

The cooling capacity for the fuel cell stack 1 by the cooling system 40 increases as the coolant temperature decreases and as the flow rate of the cooling medium increases. The coolant temperature can be lowered by increasing the rotational speed of the electric fan 44. The flow rate of the cooling medium can be increased by increasing the rotational speed of the electric pump 42.

In the fuel cell system 100 including such a cooling system 40, the coolant temperature of each unit system 101 may vary. As an example, the coolant temperature of a single unit system 101 (FC_A) (the coolant temperature of the fuel cell stack 1A) may be equal to or higher than a predetermined temperature. In this case, when the cooling capacity of the cooling system 40 is increased in order to lower the coolant temperature of the fuel cell stack 1A, the power consumption increases, and it is difficult to efficiently cool the entire fuel cell system. In the present embodiment, a cooling control device is configured as follows such that the entire fuel cell system can be efficiently cooled while suppressing the power consumption.

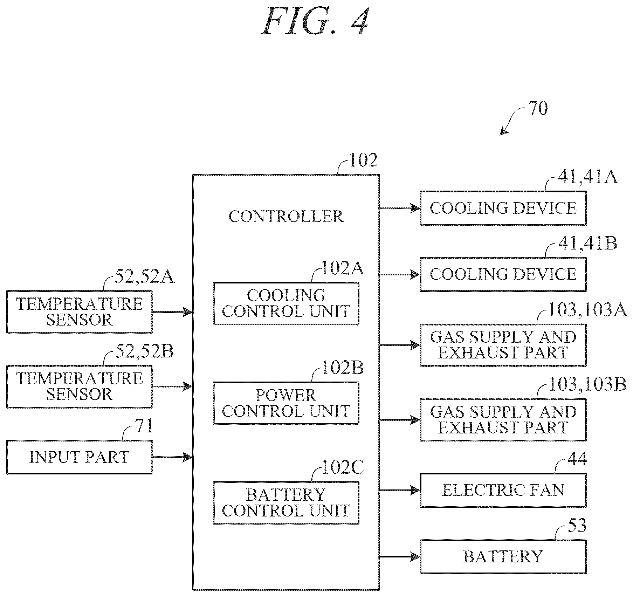

FIG. 4 is a block diagram schematically illustrating a configuration of a cooling control device 70 included in the fuel cell system 100 according to the present embodiment. Although the fuel cell system 100 includes four unit systems 101 (FIG. 2), for ease of description, a configuration of the cooling control device 70 will be described below assuming that the fuel cell system 100 includes a pair of unit systems 101 (FC_A and FC_B).

As illustrated in FIG. 4, the cooling control device 70 includes a controller 102 (FIG. 2), an input part 71, an electric fan 44, and a battery 53, and components included in each of the pair of unit systems 101 (FC_A and FC_B), specifically temperature sensors 52 (52A and 52B), cooling devices 41 (41A and 41B), and gas supply and exhaust parts 103 (103A and 103B). These components are all connected to the to the controller 102.

A gas supply and exhaust part 103 is a collective term for a fuel gas supply and exhaust part 2 and an oxidant gas supply and exhaust part 3 in FIG. 1. The gas supply and exhaust part 103 includes an injector 23, sealing valves 22, 33, and 34, an air pump 31, and a bypass valve 35. The output of the unit system 101 (FC_A) can be controlled by controlling the gas supply and exhaust part 103A. The output of the unit system 101 (FC_B) can be controlled by controlling the gas supply and exhaust part 103B. The input part 71 is a command unit for commanding the required power, and includes, for example, an accelerator opening degree sensor that detects the opening degree of an accelerator pedal.

The controller 102 functions as a cooling control unit 102A, a power control unit 102B, and a battery control unit 102C by executing a program stored in advance in a memory.

The cooling control unit 102A outputs a control signal to each of the cooling devices 41 and the electric fan 44 to control the operation of the cooling system 40. For example, when both the coolant temperatures Ta and Tb detected by the temperature sensors 52A and 52B are lower than a predetermined temperature T1, the cooling control unit 102A controls the cooling device 41A (electric pump 42) of the unit system FC_A such that a coolant flow rate Qa corresponding to the coolant temperature Ta flows, and controls the cooling device 41B of the unit system FC_B such that the coolant flow rate Qb corresponding to the coolant temperature Tb flows. That is, the cooling control unit 102A separately controls the cooling devices 41A and 41B in accordance with the coolant temperatures Ta and Tb (normal control).

From this state, for example, when only the coolant temperature Ta of the unit system FC_A becomes equal to or higher than the predetermined temperature T1, the cooling control unit 102A sets the coolant flow rate Qb of the unit system FC_B having the lower coolant temperature to a target flow rate Qα, and controls the cooling device 41A of the unit system FC_A such that the coolant flow rate Qa becomes the target flow rate Qα (coolant adjustment control). In this case, the coolant temperature Ta is not lowered by increasing the cooling capacity, but the coolant temperature Ta is lowered by suppressing power generation (limiting output) by the fuel cell stack 1 as will be described later. Thus, it is not necessary to increase the rotational speeds of the electric pump 42 and the electric fan 44, and the power consumption of the cooling system 40 can be suppressed. Thereafter, when the coolant temperature Ta becomes equal to or lower than a predetermined temperature T2 (<T1), the cooling control unit 102A ends the coolant adjustment control and executes the normal control again.

Until the coolant adjustment control described above is started, the power control unit 102B outputs a control signal to the gas supply and exhaust part 103 so as to perform power generation corresponding to the required power in accordance with the command input from the input part 71, and controls the output of the fuel cell stack 1 (normal control). When the coolant adjustment control is started (Ta≥T1), the outputs (power generation amounts) of the unit systems FC_A and FC_B are gradually decreased to a predetermined value. That is, the power control unit 102B limits the output of the unit systems FC_A and FC_B (output limitation control). Thus, the coolant temperature Ta can be lowered. Thereafter, when the coolant temperature Ta becomes equal to or lower than the predetermined temperature T2, the power control unit 102B ends the output limitation control and executes the normal control again.

The battery control unit 102C controls the charging and discharging of the battery 53. In the normal control state where the output limitation of the unit system 101 is released, the power supplied to the travel motor 55 is provided through the power generation of the unit system 101 or the discharging of the battery 53. Thus, the required power can be output by the unit system 101 and the battery 53, and the travel motor 55 can generate the target torque.

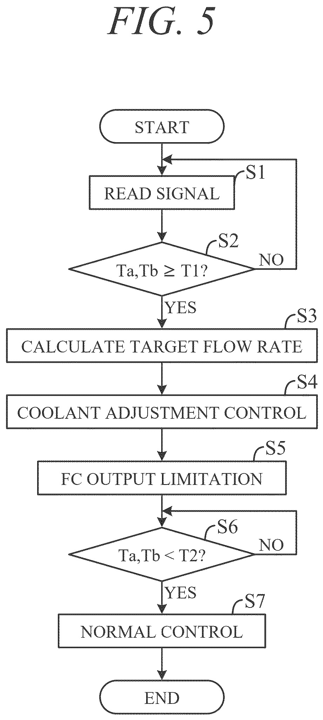

FIG. 5 is a flowchart illustrating an example of processing executed by the controller (CPU) 102 in FIG. 4 in accordance with a program stored in advance. For example, the processing shown in the flowchart is started when a power key switch of the vehicle is turned on. As illustrated in FIG. 5, first, in S1 (S: processing step), the controller 102 reads signals from the temperature sensors 52A and 52B and the input part 71. Next, in S2, the controller 102 determines whether or not any of the coolant temperatures Ta and Tb of a plurality of the unit systems 101 is equal to or higher than the predetermined temperature T1. The predetermined temperature T1 is a temperature at which the temperature of the cooling medium needs to be lowered. For example, when the temperature of the cooling medium at which the thermo valve 45 is opened is a predetermined coolant temperature, the predetermined temperature T1 is set to a temperature equal to or higher than the predetermined coolant temperature. Therefore, when affirmative determination is made in S2, the cooling medium is already supplied to the radiator 43.

When the affirmative determination is made in S2, the processing proceeds to S3, and otherwise, the processing returns to S1. In S3, the controller 102 calculates the target flow rates Qα of the unit systems 101(FC_A and FC_B). The target flow rate Qα of the unit system FC_A and the target flow rate Qα of the unit system FC_B are the same. A relationship between the coolant temperature and the target flow rate Qα is stored in advance in the memory of the controller 102. This relationship represents, for example, that the target flow rate Qα increases as the coolant temperature increases. In S2, the controller 102 calculates the target flow rate Qα based on the lowest coolant temperature among a plurality of the coolant temperatures Ta and Tb, based on the predetermined relationship between the coolant temperature and the target flow rate Qα. It is assumed that the coolant temperatures Ta and Tb have a relationship of Ta≥Tb. In this case, for example, when the coolant temperature Ta is equal to or higher than the predetermined temperature T1 and the coolant temperature Tb is lower than the predetermined temperature T1, the controller 102 calculates the target flow rate Qα based on the coolant temperature Tb.

Next, in S4, the controller 102 controls the cooling device 41 (electric pump 42) of each unit system 101 such that the coolant flow rates Qa and Qb of each unit system 101 become the target flow rate Qα. In addition, the controller 102 also controls the rotational speed of the electric fan 44. That is, the controller 102 executes the coolant adjustment control described above. At this time, the thermo valve 45 of each unit system 101 remains opened. Since the controller 102 calculates the target flow rate Qα based on the lowest coolant temperature Tb among the coolant temperatures Ta and Tb, the target flow rate Qα is suppressed, and power consumption can be suppressed.

Next, in S5, the controller 102 outputs a control signal to the gas supply and exhaust parts 103A and 103B to gradually lower the outputs of the unit systems FC_A and FC_B to the predetermined value. That is, the controller 102 executes output limitation control of the unit systems FC_A and FC_B. The reason why the outputs of not only the high-temperature unit system FC_A but also the low-temperature unit system FC_B are limited is that an increase in the coolant temperature Tb of the unit system FC_B is predicted following the increase in the coolant temperature Ta of the unit system FC_A. That is, it is considered that the increase in the coolant temperature Ta is caused by a high ambient temperature, such as the outside air temperature, and in this case, the coolant temperature Tb is considered to increase similarly. In S5, since the controller 102 limits the outputs of all the unit systems FC_A and FC_B, the coolant temperatures Ta and Tb can be efficiently lowered.

Further, in S5, the controller 102 controls the discharging operation of the battery 53 such that the battery 53 supplies power corresponding to the limited output of the unit system 101. Thus, the required power corresponding to the input of the input part 71 can be output in the entire fuel cell system. As a result, the drive torque of the travel motor 55 can be maintained at the target drive torque corresponding to the operation of the accelerator pedal.

Next, in S6, the controller 102 determines whether or not both of the coolant temperatures Ta and Tb detected by the temperature sensors 52A and 52B are lower than the predetermined temperature T2. The predetermined temperature T2 is only required to be equal to or lower than the predetermined temperature T1, and for example, the predetermined temperature T2 is set to a value lower than the predetermined temperature T1. S6 is repeated until an affirmative determination is made.

When the affirmative determination is made in S6, the processing proceeds to S7. In S7, the controller 102 ends the coolant adjustment control of the cooling system 40 and the processing proceeds to the normal control. Further, the controller 102 releases the output limitation of the unit system 101, and the processing proceeds to the normal control. Thus, the processing of the cooling control device 70 ends.

In FIG. 5, the processing in a case where two unit systems 101 (FC_A and FC_B) are provided has been described. However, as illustrated in FIG. 2, the same processing as that in FIG. 5 is executed also in a case where four unit systems 101 (FC_A, FC_B, FC_C, and FC_D) are provided. For example, it is assumed that the coolant temperature Ta of the unit system FC_A is the highest and the coolant temperature Tb of the unit system FC_B is the lowest among the four unit systems 101. At this time, the target flow rates Qα of the unit systems FC_C and FC_D calculated in S3 are the same as the target flow rate Qα of the unit system FC_B. The degree of the output limitation of the unit systems FC_C and FC_D in S5 is also the same as the degree of the output limitation of the unit system FC_B, and all the unit systems 101 (FC_A, FC_B, FC_C, and FC_D) are subjected to the output limitation in the same manner. That is, the outputs of all the unit systems 101 are gradually lowered to a predetermined value. When the coolant temperature of each of the fuel cell stacks 1A to 1D becomes lower than the predetermined temperature T2, in S7, the coolant adjustment control of all the unit systems 101 (FC_A, FC_B, FC_C, and FC_D) ends, and the output limitation is also released.

According to the present embodiment, the following operations and effects are achievable.
(1) The fuel cell system 100 includes: a plurality of fuel cell stacks 1 (1A to 1D); temperature sensors 52 that detect respective temperatures of the plurality of fuel cell stacks 1; a cooling system 40 that includes cooling devices 41 (such as electric pumps 42) that respectively supply a cooling medium to the plurality of fuel cell stacks 1; a battery 53; and a controller 102 that controls the cooling system 40, outputs of the plurality of fuel cell stacks 1, and charging and discharging of the battery 53 in accordance with the temperatures detected by the temperature sensors 52 (FIGS. 1, 2, and 4). The plurality of fuel cell stacks 1 includes a fuel cell stack 1A of a unit system FC_A and a fuel cell stack 1B of a unit system FC_B (FIG. 3). It is assumed that the temperature (coolant temperature) Tb of the fuel cell stack 1B is lower than the temperature (coolant temperature) Ta of the fuel cell stack 1A. In this case, when the temperature Ta of the fuel cell stack 1A detected by the temperature sensor 52A becomes equal to or higher than a predetermined temperature T1, the controller 102 controls the cooling system 40 so as to cool the fuel cell stack 1A and the fuel cell stack 1B with a cooling capacity corresponding to the temperature Tb of the fuel cell stack 1B, performs output limitation on the fuel cell stacks 1A and 1B, and further discharges power corresponding to the output limitation on the fuel cell stacks 1A and 1B from the battery 53.
   With this configuration, when the coolant temperature Ta becomes equal to or higher than the predetermined temperature T1, it is not necessary to increase the cooling capacity of the unit system FC_A (for example, increase the rotational speed of the electric pump 42). Therefore, it is possible to suppress the power consumption of the fuel cell system 100. Since the fuel cell stacks 1A and 1B are cooled with the cooling capacity corresponding to the coolant temperature Tb of the low-temperature side unit system FC_B, the target flow rate Qα of the coolant in the high-temperature side unit system FC_A decreases. As a result, the rotational speed of the electric pump 42 of the unit system FC_A decreases, and the power consumption of the unit system FC_A can be reduced.
(2) The fuel cell stack 1A is a highest-temperature fuel cell stack among the plurality of fuel cell stacks 1A to 1D. Thus, when the temperature (coolant temperature) Ta of at least one of the plurality of fuel cell stacks 1A to 1D becomes equal to or higher than the predetermined temperature T1, control (coolant adjustment control or output limitation control) for lowering the temperature of the fuel cell stack 1A is started. Therefore, the temperatures of the plurality of fuel cell stacks 1A to 1D can be reliably suppressed to equal to or lower than the predetermined temperature T1.
(3) When the temperature (coolant temperature) Ta of the fuel cell stack 1A detected by the temperature sensor 52A becomes equal to or higher than the predetermined temperature T1, the controller 102 controls the cooling system 40 so as to cool all of the plurality of fuel cell stacks 1A to 1D with the cooling capacity corresponding to the temperature (coolant temperature) Tb of the fuel cell stack 1B (FIG. 5). Thus, the power consumption of the unit system 101(for example, the unit systems FC_C and FC_D) in which the coolant temperature is not equal to or higher than the predetermined temperature T1 can also be suppressed.
(4) The fuel cell stack 1B is a lowest-temperature fuel cell stack among the plurality of fuel cell stacks 1A to 1D. Thus, the target flow rate Qα of the coolant is minimized, and the power consumption can be greatly suppressed.
(5) When the temperature (coolant temperature) Ta of the high-temperature fuel cell stack 1A detected by the temperature sensor 52A becomes equal to or higher than the predetermined temperature T1, the controller 102 performs the output limitation on all of the plurality of fuel cell stacks 1A to 1D (FIG. 5). Thus, it is possible to efficiently cool the plurality of fuel cell stacks 1A to 1D.
(6) When the temperature (coolant temperature) Ta of the fuel cell stack 1A detected by the temperature sensor 52A becomes less than the predetermined temperature T2, which is lower than the predetermined temperature T1, while the output limitation is executed on all of the plurality of fuel cell stacks 1A to 1D, the controller 102 releases the output limitation on all of the plurality of fuel cell stacks 1A to 1D (FIG. 8). Thus, since the transition to the normal control is performed collectively rather than for each unit system, the processing is facilitated.
(7) The cooling system 40 further includes a radiator 43 that cools a cooling medium, flow channels PA36 and PA37 that guide the cooling medium having passed through the radiator 43 to the plurality of fuel cell stacks 1A to 1D via a branch portion 47, and flow channels PA34 and PA35 that guide the cooling medium having passed through the plurality of fuel cell stacks 1A to 1D to the radiator 43 via a merging portion 46. Thus, since the plurality of cooling devices 41 share the radiator 43, the cooling system 40 can be configured at low costs.

The above embodiment can be modified to various forms. Hereinafter, several modified examples will be described. In the above embodiment, a temperature detection part that detects the temperature of the fuel cell is configured by a temperature sensor 52 that detects the coolant outlet temperature. However, it is also possible to detect other parts that have a correlation with the temperature of a fuel cell (fuel cell stack 1), and therefore the configuration of the temperature detection part is not limited to the above. In the above embodiment, an electric pump 42 that supplies coolant to each of the plurality of fuel cell stacks 1 is configured as a cooling medium supply part. However, the configuration of a cooling system with the cooling medium supply part, i.e., the cooling system 40, is not limited to the above.

In the above embodiment, a battery 53 that stores the power generated by the fuel cell is used as a power storage device, but a capacitor may also be used as the power storage device. In the above embodiment, a fuel cell system 100 with four unit systems 101 is illustrated. However, if the fuel cell system includes the fuel cell in the unit system FC_A, i.e., the fuel cell stack 1A (a first fuel cell), and the fuel cell in the unit system FC_B, i.e., the fuel cell stack 1B (a second fuel cell), the number of unit systems 101 is not limited to the above. In this connection, a fuel cell with a lower temperature than the first fuel cell can be used as the second fuel cell.

In the above embodiment, among the plurality of fuel cells (fuel cell stacks 1A to 1D), a fuel cell having a highest temperature (the fuel cell stack 1A) is configured as the first fuel cell, but the first fuel cell does not have to have the highest temperature. In the above embodiment, among the plurality of fuel cells (fuel cell stacks 1A to 1D), a fuel cell having a lowest temperature (the fuel cell stack 1B) is configured as the second fuel cell, but the second fuel cell does not have to have the lowest temperature. In the above embodiment, when the temperature (coolant temperature) Ta of the fuel cell stack 1A becomes equal to or higher than a predetermined temperature T1, all the fuel cells are cooled with a cooling capacity corresponding to the temperature (coolant temperature) Tb of the fuel cell stack 1B. However, it is also possible to cool only some of the fuel cells.

In the above embodiment, when the temperature (coolant temperature) Ta of the fuel cell stack 1A becomes equal to or higher than a predetermined temperature T1, the controller 102 as a control unit performs the output limitation for all the fuel cells (fuel cell stacks 1A to 1D). However, it is also possible to perform the output limitation for only some of the fuel cells. In the above embodiment, when the coolant temperature becomes equal to or higher to a predetermined temperature T1 (a first predetermined temperature), the output limitation for all the fuel cells is initiated, and when the coolant temperature falls below a predetermined temperature T2 (a second predetermined temperature), the output limitation for all the fuel cells is released. However, it is also possible to release the output limitation for only some of the fuel cells.

In the above embodiment, a cooling system 40 is equipped with a single radiator 43 (a heat exchanger) for the plurality of unit systems 101, and connects the radiator 43 with the plurality of unit systems 101 via a branch portion 47 and the flow paths PA36 and PA37 (supply flow paths), and a merging portion 46 and the flow paths PA34 and PA35 (recovery flow paths). However, the configuration of a cooling system is not limited to the above.

In the above embodiment, an example of applying the fuel cell system 100 to a fuel cell vehicle is described, but the fuel cell system of the present invention can be applied to various mobile bodies having a plurality of fuel cells, and can also be applied to non-mobile bodies.

The above embodiment can be combined as desired with one or more of the above modifications. The modifications can also be combined with one another.

According to the present invention, it is possible to cool fuel cells while suppressing power consumption of a fuel cell system.

Above, while the present invention has been described with reference to the preferred embodiments thereof, it will be understood, by those skilled in the art, that various changes and modifications may be made thereto without departing from the scope of the appended claims.

A fuel cell system (100) includes a temperature detection part (52) detecting temperatures of respective fuel cells (1), a cooling system (40) including a cooling medium supply part (42) supplying a cooling medium to each of the plurality of fuel cells (1), a power storage device (53), and a control unit (102). When a temperature (Ta) of a first fuel cell (1A) detected by the temperature detection part (52) becomes equal to or higher than a predetermined temperature (T1), the control unit (102) controls the cooling system (40) so as to cool the first and second fuel cells (1A, 1B) with a cooling capacity corresponding to a temperature (Tb) of a second fuel cell (1B) having a lower temperature than the first fuel cell (1A), performs output limitation for the first fuel cell (1A), and discharges an electric power from the power storage device (53) in accordance with the output limitation.

## Claims

1. A fuel cell system comprising:
a plurality of fuel cells (1) including a first fuel cell (1A) and a second fuel cell (1B);
a temperature detection part (52) configured to detect a temperature of each of the plurality of fuel cells (1);
a cooling system (40) including a cooling medium supply part (42) configured to supply a cooling medium to the each of the plurality of fuel cells (1);
a power storage device (53); and
a control unit (102) configured to control the cooling system (40), an output of the plurality of fuel cells (1), and a charging and discharging of the power storage device (53), in accordance with the temperature detected by the temperature detection part (52), wherein
when a temperature (Ta) of the first fuel cell (1A) detected by the temperature detection part (52) becomes equal to or higher than a predetermined temperature (T1), the control unit (102) controls the cooling system (40) so as to cool the first fuel cell (1A) and the second fuel cell (1B) with a cooling capacity corresponding to a temperature (Tb) of the second fuel cell (1B) having a lower temperature than the first fuel cell (1A), performs an output limitation for the first fuel cell (1A), and discharges an electric power from the power storage device (53) in accordance with the output limitation for the first fuel cell (1A).

2. The fuel cell system according to claim 1, wherein
the first fuel cell (1A) is a fuel cell having a highest temperature among the plurality of fuel cells (1).

3. The fuel cell system according to claim 2, wherein
when the temperature (Ta) of the first fuel cell(1A) detected by the temperature detection part (52) becomes equal to or higher than the predetermined temperature (T1), the control unit (102) controls the cooling system (40) so as to cool all of the plurality of fuel cells (1) with the cooling capacity corresponding to the temperature (1B) of the second fuel cell (1B).

4. The fuel cell system according to any one of claims 1 to 3, wherein
the second fuel cell (1B) is a fuel cell having a lowest temperature among the plurality of fuel cells (1).

5. The fuel cell system according to any one of claims 1 to 4, wherein
when the temperature (Ta) of the first fuel cell (1A) detected by the temperature detection part (52) becomes equal to or higher than the predetermined temperature (T1), the control unit (102) performing the output limitation for all of the plurality of fuel cells (1).

6. The fuel cell system according to claim 5, wherein
the predetermined temperature (T1) is defined as a first predetermined temperature, and
when the temperature (Ta) of the first fuel cell (1A) detected by the temperature detection part (52) becomes less than a second predetermined temperature (T2) lower than the first predetermined temperature (T1) while performing the output limitation for all of the plurality of fuel cells (1), the control unit (102) releases the output limitation for all of the plurality of fuel cells (1).

7. The fuel cell system according to any one of claims 1 to 6, wherein
the cooling system (40) further includes a heat exchanger (43) cooling the cooling medium, a supply flow path (PA36, PA37) guiding the cooling medium having passed through the heat exchanger (43) to the plurality of fuel cells (1) through a branch portion (47), and a recovery flow path (PA34, PA35) guiding the cooling medium having passed through the plurality of fuel cells (1) to the heat exchanger (43) through a merging portion (46).

8. The fuel cell system according to claim 7, wherein
the cooling medium supply part (42) includes an electric pump, and
the cooling system (40) further incudes a thermo valve (45) configured to switch in accordance with a temperature of the cooling medium, and to permit or prohibit a flow of the cooling medium having passed through the each of the plurality of fuel cells (1), to the heat exchanger (43).

9. The fuel cell system according to claim 8, wherein
the thermo valve (45) is configured to permit the flow of the cooling medium to the heat exchanger (43) when the temperature of the cooling medium is equal to or higher than a predetermined cooling medium temperature, and to prohibit the flow of the cooling medium to the heat exchanger (43) when the temperature of the cooling medium is less than the predetermined cooling medium temperature, and
the predetermined temperature (T1) is equal to or higher than the predetermined cooling medium temperature.
